# EUROPÄISCHE PATENTANMELDUNG

(11) **EP 2 705 746 A1**
(43) Veröffentlichungstag der Anmeldung: **12.03.2014**
(21) Anmeldenummer: 12183385.9
(22) Anmeldetag: 06.09.2012
(51) Int. Cl.: A01G 17/18, A01N 3/00, C09D 175/00

(54) **Verfahren zur Behandlung von Fäulnisherden oder Rindenwunden von Bäumen**

(71) Anmelder: Flügel GmbH, 37520 Osterode am Harz (DE)
(72) Erfinder: Zinngrebe, Kurt, 37520 Osterode (DE)
(74) Vertreter: Michalski Hüttermann & Partner Patentanwälte

(57) **Zusammenfassung**

Ein Verfahren zur Behandlung von Fäulnisherden und/oder Verletzungen der Rinde von stoffwechselaktiven Laub- oder Nadelgehölzen, umfassend den Schritt des Auftragens einer Wundverschluss-Zusammensetzung auf den Fäulnisherd und/oder die Verletzung, zeichnet sich dadurch aus, dass die Wundverschluss-Zusammensetzung die Komponenten (I) und/oder (II) umfasst:
(I) ein 1K- oder 2K-Polyurethansystem, wobei die Isocyanat-Komponente des 1K- oder 2K-Polyurethansystems ein Isocyanurat eines aliphatischen Polyisocyanats umfasst;
(II) ein silanterminiertes Polymer.

## Beschreibung

Die vorliegende Erfindung betrifft ein Verfahren zur Behandlung von Fäulnisherden und/oder Verletzungen der Rinde von stoffwechselaktiven Laub- oder Nadelgehölzen, umfassend den Schritt des Auftragens einer Wundverschluss-Zusammensetzung auf den Fäulnisherd und/oder die Verletzung. Sie betrifft weiterhin die Verwendung einer solchen Wundverschluss-Zusammensetzung.

Nach einer Schnittmaßnahme bei Baumpflegearbeiten sollten so entstehende Wundflächen mit einem Wundverschlussmittel behandelt werden, um Einwirkungen von außen wie etwa durch Pilzsporen zu vermeiden. Aus dem gleichen Grund sollten unbeabsichtigte Baumverletzungen, wie sie als Folge einer Kollision eines Fahrzeugs auftreten können, behandelt werden. Eindringende Pilzsporen führen im schlimmsten Fall zur Fäulnis in der Baumwunde, und in deren Folge kann es zu dem Absterben von Baumsegmenten beziehungsweise dem ganzen Baum kommen.

Fäulnisschäden, die nicht frühzeitig saniert werden können, führen häufig zu empfindlichen Verlusten in der Forstwirtschaft und im Obstanbau, da Bäume oft auf der Höhe ihrer Ertragskraft als Nutzholzlieferant oder Obstlieferant betroffen sind. Verzögertes Wachstum, reduzierter Fruchtertrag, erhöhter Windbruchanteil und Reduzierung der ökologischen Funktion bis zum Totalausfall oder unerwünschte Veränderungen einer Parklandschaft können als Folgeschäden auftreten. In jedem Falle treten unwiederbringliche Zeitverluste in der Ertragsentwicklung eines forstwirtschaftlich oder zur Fruchterzeugung genutzten Baumbestandes ein, weil nachwachsende Ersatzbäume, im Vergleich zu anderen Wirtschaftsgütern, sehr lange Zeiträume bis zum Erreichen der Ertragsschwelle benötigen. Auch aus Aspekten des Landschaftsschutzes und Denkmalschutzes ist es oft nötig, Fäulnisschäden an entsprechenden Naturdenkmälern zu behandeln. Hohe volkswirtschaftliche Verluste entstehen auch durch Fäulnisprozesse an nicht mehr stoffwechselaktivem Holz.

DE 1 965 717 A1 beschreibt Mittel zum Stillen beziehungsweise Stoppen des Saftflusses bei durch künstliche oder natürliche Einwirkung gewebeverletzten Pflanzen, insbesondere von Bäumen und Sträuchern, auf der Basis von Kunstharzen und/oder Kunstharzlösungen. Diese Mittel können auch pigmentiert sein und zeichnen sich durch einen Gehalt an feuchtigkeitshärtenden Kunstharzen oder Kunstharzlösungen aus. Weiterhin können solche Mittel sich durch einen Gehalt an Silikonharzen und/oder Silikonharzlösungen als Hydrophobierungsmittel auszeichnen.

WO 87/02548 A1 offenbart die Verwendung von feuchtigkeitshärtenden Ein- und Zweikomponenten-Polyurethanharzlacken als Baumlack zur Schnitt- und Schadflächenversiegelung an Bäumen. Diese werden als lichtbeständig und klarsichtig beschrieben und sollen eine natürliche Schutzholzbildung unter der Versiegelungsfläche zulassen. Als besonders geeignet wird für die 1K-Systeme ein aliphatisches Polyisocyanat-Prepolymer mit ca. 65% Festharzanteil, gelöst in Solventnaphtha 100/1-Methoxypropylacetat-2 im Verhältnis 4:1, beschrieben. Für 2K-Systeme wird ein Mischungsverhältnis von 4 Gewichtsteilen Desmophen®-Lösung und ein Gewichtsteil Desmodur®-Lösung empfohlen.

DE 42 05 953 A1 beschäftigt sich mit einem Verfahren zur Sanierung von Fäulnisherden und Verletzungen der Rinde von Laub- und Nadelgehölzen mit einem einen Wundverschluss bildenden Material sowie zur Sanierung an nicht mehr stoffwechselaktivem Holz, wobei die Wunde mit einem in situ aus Monomeren erzeugten Polymeren behandelt wird. Der so erhältliche Wundverschluss tritt mit funktionellen Gruppen der Gehölzsubstanz in Form einer dauerhaften Bindung in Wechselwirkung. In zwei Ausführungsbeispielen wird über den Einsatz von handelsüblichem Montageschaum zu diesem Zweck berichtet.

In der Praxis zeigte sich jedoch, dass die auf dem Markt etablierten Wundverschluss-Mittel bei hohem Saftdruck den Halt verlieren können. Die vorliegende Erfindung hat sich daher die Aufgabe gestellt, ein verbessertes Verfahren zur Behandlung von Baumverletzungen anzugeben.

Erfindungsgemäß gelöst wird diese Aufgabe durch ein Verfahren zur Behandlung von Fäulnisherden und/oder Verletzungen der Rinde von stoffwechselaktiven Laub- oder Nadelgehölzen, umfassend den Schritt des Auftragens einer Wundverschluss-Zusammensetzung auf den Fäulnisherd und/oder die Verletzung, wobei die Wundverschluss-Zusammensetzung die Komponenten (I) und/oder (II) umfasst:
(I) ein 1K- oder 2K-Polyurethansystem, wobei die Polyisocyanat-Komponente des 1K- oder 2K-Polyurethansystems ein Isocyanurat eines aliphatischen Polyisocyanats umfasst;
(II) ein silanterminiertes Polymer.

Es wurde gefunden, dass die einzusetzende Wundverschluss-Zusammensetzung die Wundfläche unmittelbar nach der Schnittmaßnahme versiegeln kann. Dadurch wird die offene Wundstelle dauerhaft vor äußeren Einwirkungen wie Witterung, Schädlingen und Schadpilzen geschützt. Eine rasche Vernetzung oder Aushärtung hat darüber hinaus den Vorteil, dass der herrschende Saftdruck das Wundpräparat nicht "wegschwemmen" kann. Seitlich am Baumstamm vorhandene Wunden werden durch den Einsatz des erfindungsgemäße Verfahren vor schädlichen Luftembolien geschützt.

Ist ein Anfahrschaden an einem Baum älter als ungefähr zwei Wochen und sind somit die vorhandenen teilungsfähigen Zellen auf der Wundoberfläche abgestorben, kann der Schaden dennoch durch das erfindungsgemäße Verfahren behandelt werden. Das offene Holz wird in der Zeit der Wundüberwallung vor Witterungseinflüssen geschützt. Der Baum hat durch die Beschichtung mehr Zeit für die Kompartimentierung der Zellen, die mit Hilfe des Wundverschlussmittels effektiver ablaufen kann. Schäden durch Verletzungen des Holzkörpers können so deutlich reduziert werden.

Eine Behandlung durch das erfindungsgemäße Verfahren hat darüber hinaus auch positive Auswirkungen auf die Entstehung der Wundüberwallung bei gleichzeitiger Reduktion von Kambialnekrosen, also einem verletzungsbedingten Absterben des Kambiums am Wundrand. Somit wird die Einkapselung des Schadens und damit die Phase 4 nach dem CODIT-Prinzip (Compartmentalization Of Decay In Trees, Kompartimentierung von Fäule in Bäumen) schneller erreicht als mit herkömmlichen Mitteln oder ohne Wundbehandlung.

Für eine 1 m² große Fläche werden im Regelfall ca. 500 g bis 2000 g der Wundverschluss-Zusammensetzung benötigt.

Im Sinne der vorliegenden Erfindung bedeutet der Begriff "1K-Polyurethansystem" eine Mischung umfassend eine partiell oder vollständig blockierte Polyisocyanat-Komponente und eine NCO-reaktive Komponente. Als Blockierungsmittel für NCO-Gruppen kommen alle gängigen, bei Temperaturen unterhalb von 200 °C wieder abspaltbaren Verbindungen in Frage, wie zum Beispiel Methylethylketoxim, Acetonoxim, Phenol und Phenol-Derivate, ε-Caprolactam, 1,2,4-Triazol, 2,5-Dimethylpyrazol, Malonsäurediethylester, Acetessigsäureethylester, N-t-Butyl-N-benzylamin oder Diisopropylamin. 1K-Polyurethansysteme reagieren nach Kontakt mit Luftfeuchtigkeit oder nach Erwärmung zu den entsprechenden Polyurethanpolymeren.

Im Sinne der vorliegenden Erfindung bedeutet der Begriff "2K-Polyurethansystem" eine erst unmittelbar vor dem beabsichtigten Einsatz herstellte Mischung umfassend eine Polyisocyanat-Komponente und eine NCO-reaktive Komponente. Dieses System reagiert dann, gegebenenfalls unter Katalyse, zu einem Polyurethanpolymer.

Geeignete NCO-reaktive Komponenten sind insbesondere Polyole, Polyamine, Polyaminoalkohole und Polythiole.

Beispiele für Polyamine sind Ethylendiamin, 1,2- und 1,3-Diaminopropan, 1,4-Diaminobutan, 1,6-Diaminohexan, Isophorondiamin, ein Isomerengemisch von 2,2,4- und 2,4,4-Trimethylhexamethylendiamin, 2-Methylpentamethylendiamin, Diethylentriamin, 1,3- und 1,4-Xylylendiamin, α, α, α', α'-Tetramethyl-1,3- und -1,4-xylylendiamin und 4,4'-Diaminodicyclohexylmethan, Diethylmethylbenzoldiamin (DETDA), 4,4'-Diamino-3,3'-dichlordiphenylmethane (MOCA), Dimethylethylendiamin, 1,4-Bis(aminomethyl)cyclohexan, 4,4'-Diamino-3,3'-dimethyldicyclohexylmethan und 4,4'-Diamino-3,5-diethyl-3',5'-diisopropyldicyclohexylmethan. Weiterhin geeignet sind polymere Polyamine wie Polyoxyalkylenamine.

Beispiele für Aminoalkohole sind N-Aminoethylethanolamin, Ethanolamin, 3-Aminopropanol, Neopentanolamin und Diethanolamin.

Beispiele für Polythiole sind Di(2-mercaptoethyl)ether, Pentaerythritoltetrakisthioglycolat, Pentaerythritoltetrakis(3 -mercaptopropionat) und 1,2-Bis((2-mercaptoethyl)thio)-3-mercaptopropan.

Die Polyole können beispielsweise ein zahlenmittleres Molekulargewicht Mₙ von ≥ 62 g/mol bis ≤ 8000 g/mol, bevorzugt von ≥ 90 g/mol bis ≤ 5000 g/mol und mehr bevorzugt von ≥ 92 g/mol bis ≤ 1000 g/mol aufweisen.

Die durchschnittliche OH-Funktionalität der genannten Polyole ist zum Beispiel ≥ 2, beispielsweise in einem Bereich von ≥ 2 bis ≤ 6, vorzugsweise von ≥ 2,1 bis ≤ 4 und mehr bevorzugt von ≥ 2,2 bis ≤ 3.

Verwendbare Polyetherpolyole sind beispielsweise Polytetramethylenglykolpolyether, wie sie durch Polymerisation von Tetrahydrofuran mittels kationischer Ringöffnung erhältlich sind.

Ebenfalls geeignete Polyetherpolyole sind Additionsprodukte von Styroloxid, Ethylenoxid, Propylenoxid, Butylenoxide und/oder Epichlorhydrins an di- oder polyfunktionelle Startermoleküle.

Geeignete Startermoleküle sind zum Beispiel Wasser, Ethylenglykol, Diethylenglykol, Butyldiglykol, Glycerin, Diethylenglykol, Trimethylolpropan, Propylenglykol, Pentaerythrit, Sorbit, Saccharose, Ethylendiamin, Toluoldiamin, Triethanolamin, 1,4-Butandiol, 1,6-Hexandiol sowie niedermolekulare, Hydroxylgruppen aufweisende Ester derartiger Polyole mit Dicarbonsäuren.

Geeignete Polyesterpolyole sind unter Anderem Polykondensate aus Di- sowie weiterhin Tri-, und Tetraolen und Di- sowie weiterhin Tri- und Tetracarbonsäuren oder Hydroxycarbonsäuren oder Lactonen. Anstelle der freien Polycarbonsäuren können auch die entsprechenden Polycarbonsäureanhydride oder entsprechende Polycarbonsäureester von niederen Alkoholen zur Herstellung der Polyester verwendet werden.

Beispiele für geeignete Diole sind Ethylenglykol, Butylenglykol, Diethylenglykol, Triethylenglykol, Polyalkylenglykole wie Polyethylenglykol, weiterhin 1,2-Propandiol, 1,3-Propandiol, Butandiol(1,3), Butandiol(1,4), Hexandiol(1,6) und Isomere, Neopentylglykol oder Hydroxypivalinsäureneopentylglykolester. Daneben können auch Polyole wie Trimethylolpropan, Glycerin, Erythrit, Pentaerythrit, Trimethylolbenzol oder Trishydroxyethylisocyanurat eingesetzt werden.

Als Polycarbonsäuren können beispielsweise Phthalsäure, Isophthalsäure, Terephthalsäure, Tetrahydrophthalsäure, Hexahydrophthalsäure, Cyclohexandicarbonsäure, Adipinsäure, Azelainsäure, Sebacinsäure, Glutarsäure, Tetrachlorphthalsäure, Maleinsäure, Fumarsäure, Itaconsäure, Malonsäure, Korksäure, Bernsteinsäure, 2-Methylbernsteinsäure, 3,3-Diethylglutarsäure, 2,2-Dimethylbernsteinsäure, Dodekandisäure, Endomethylentetrahydrophthalsäure, Dimerfettsäure, Trimerfettsäure, Zitronensäure, oder Trimellithsäure eingesetzt werden. Als Säurequelle können auch die entsprechenden Anhydride verwendet werden.

Sofern die mittlere Funktionalität des zu veresternden Polyols ≥ 2 ist, können zusätzlich auch Monocarbonsäuren wie Benzoesäure und Hexancarbonsäure mit verwendet werden.

Hydroxycarbonsäuren, die als Reaktionsteilnehmer bei der Herstellung eines Polyesterpolyols mit endständigen Hydroxylgruppen mitverwendet werden können, sind beispielsweise Hydroxycapronsäure, Hydroxybuttersäure, Hydroxydecansäure, Hydroxystearinsäure und dergleichen. Geeignete Lactone sind unter anderem Caprolacton, Butyrolacton und Homologe.

Verwendbare Polycarbonatpolyole sind Hydroxylgruppen aufweisende Polycarbonate, zum Beispiel Polycarbonatdiole. Diese sind durch Reaktion von Kohlensäurederivaten, wie Diphenylcarbonat, Dimethylcarbonat oder Phosgen, mit Polyolen, bevorzugt Diolen, oder durch die Copolymerisation von Alkylenoxiden, wie zum Beispiel Propylenoxid, mit CO₂ erhältlich.

Beispiele derartiger Diole sind Ethylenglykol, 1,2- und 1,3-Propandiol, 1,3- und 1 ,4-Butandiol, 1,6-Hexandiol, 1,8-Octandiol, Neopentylglykol, 1,4-Bishydroxymethylcyclohexan, 2-Methyl-1,3-propandiol, 2,2,4-Trimethylpentandiol-1,3, Dipropylenglykol, Polypropylenglykole, Dibutylenglykol, Polybutylenglykole, Bisphenol A und lactonmodifizierte Diole der vorstehend genannten Art.

Statt oder zusätzlich zu reinen Polycarbonatdiolen können auch Polyether-Polycarbonatdiole eingesetzt werden.

Verwendbare Polyetheresterpolyole sind solche Verbindungen, die Ethergruppen, Estergruppen und OH-Gruppen enthalten. Organische Dicarbonsäuren mit bis zu 12 Kohlenstoffatomen sind zur Herstellung der Polyetheresterpolyole geeignet, vorzugsweise aliphatische Dicarbonsäuren mit ≥ 4 bis ≤ 6 Kohlenstoffatomen oder aromatische Dicarbonsäuren, die einzeln oder im Gemisch verwendet werden. Beispielhaft seien Korksäure, Azelainsäure, Decandicarbonsäure, Maleinsäure, Malonsäure, Phthalsäure, Pimelinsäure und Sebacinsäure sowie insbesondere Glutarsäure, Fumarsäure, Bernsteinsäure, Adipinsäure, Phthalsäure, Terephthalsäure und Isoterephthalsäure genannt. Als Derivate dieser Säuren können beispielsweise deren Anhydride sowie deren Ester und Halbester mit niedermolekularen, monofunktionellen Alkoholen mit ≥ 1 bis ≤ 4 Kohlenstoffatomen eingesetzt werden.

Als weitere Komponente zur Herstellung der Polyetheresterpolyole werden Polyetherpolyole eingesetzt, die man durch Alkoxylieren von Startermolekülen wie mehrwertigen Alkoholen erhält. Die Startermoleküle sind mindestens difunktionell, können aber gegebenenfalls auch Anteile höherfunktioneller insbesondere trifunktioneller Startermoleküle enthalten.

Startermoleküle sind zum Beispiel Diole mit zahlenmittleren Molekulargewichten Mₙ von vorzugsweise > 18 g/mol bis < 400 g/mol oder von > 62 g/mol bis < 200 g/mol wie 1,2-Ethandiol, 1,3-Propandiol, 1,2-Propandiol, 1,4-Butandiol, 1,5-Pentendiol, 1,5-Pentandiol, Neopentylglykol, 1,6- Hexandiol, 1,7-Heptandiol, Octandiol-1,8, 1,10-Decandiol, 2-Methyl-1,3-propandiol, 2,2-Dimethyl-1,3-propandiol, 3-Methyl-1, 5-pentandiol, 2-Butyl-2-ethyl-1,3-propandiol, 2-Buten-1,4-diol und 2-Butin-1,4-diol, Etherdiole wie Diethylenglykol, Triethylenglykol, Tetraethylenglykol, Dibutylenglykol, Tributylenglykol, Tetrabutylenglykol, Dihexylenglykol, Trihexylenglykol, Tetrahexylenglykol und Oligomerengemische von Alkylenglykolen, wie Diethylenglykol.

Neben den Diolen können auch Polyole mit zahlenmittleren Funktionalitäten von > 2 bis ≤ 8, oder von ≥ 3 bis ≤ 4 mitverwendet werden, zum Beispiel 1,1,1-Trimethylolpropan, Triethanolamin, Glycerin, Sorbitan und Pentaerythrit sowie auf Triolen oder Tetraolen gestartete Polyethylenoxidpolyole mit mittleren Molekulargewichten von vorzugsweise > 62 g/mol bis < 400 g/mol oder von ≥ 92 g/mol bis ≤ 200 g/mol.

Polyetheresterpolyole können auch durch die Alkoxylierung von Reaktionsprodukten, die durch die Umsetzung von organischen Dicarbonsäuren und Diolen erhalten werden, hergestellt werden. Als Derivate dieser Säuren können beispielsweise deren Anhydride eingesetzt werden, wie zum Beispiel Phthalsäureanhydrid.

Polyacrylatpolyole können durch radikalische Polymerisation von Hydroxylgruppen aufweisenden, olefinisch ungesättigten Monomeren oder durch radikalische Copolymersation von Hydroxylgruppen aufweisenden, olefinisch ungesättigten Monomeren mit gegebenenfalls anderen olefinisch ungesättigten Monomeren erhalten werden. Beispiele hierfür sind Ethylacrylat, Butylacrylat, 2-Ethylhexylacrylat, Isobornylacrylat, Methylmethacrylat, Ethylmethacrylat, Butylmethacrylat, Cyclohexylmethacrylat, Isobornylmethacrylat, Styrol, Acrylsäure, Acrylnitril und/oder Methacrylnitril. Geeignete Hydroxylgruppen aufweisende, olefinisch ungesättigte Monomere sind insbesondere 2-Hydroxyethyl-acrylat, 2-Hydroxyethyl-methacrylat, das durch Anlagerung von Propylenoxid an Acrylsäure erhältliche Hydroxypropyl-acrylat-Isomerengemisch sowie das durch Anlagerung von Propylenoxid an Methacrylsäure erhältliche Hydroxypropylmethacrylat-Isomerengemisch. Endständige Hydroxylgruppen können auch in geschützter Form vorliegen. Geeignete Radikalinitiatoren sind die aus der Gruppe der Azoverbindungen, wie zum Beispiel Azoisobutyronitril (AIBN), oder aus der Gruppe der Peroxide, wie beispielsweise Di-tert.-Butylperoxid.

Denkbar ist auch der Einsatz von Polyolen, welche auf nachwachsenden Rohstoffen wie Rizinusöl basieren. Insbesondere verleihen mit Ricinolsäure modifizierte Polyole den Polyurethanpolymeren Elastizität und ausgezeichnete Wasserfestigkeit.

Es ist erfindungsgemäß vorgesehen, dass die Isocyanat-Komponente des 1K- oder 2K-Polyurethansystems ein Isocyanurat eines aliphatischen Polyisocyanats umfasst. Geeignete Polyisocyanate für die Trimerisierung zum Isocyanurat sind unter Anderem Tetramethylendiisocyanat, Cyclohexan-1,3- und 1,4-diisocyanat, Hexamethylendiisocyanat (HDI), 1 -Isocyanato-3,3,5-trimethyl-5-isocyanatomethylcyclohexan (Isophorondiisocyanat, IPDI), Methylen-bis-(4-isocyantocyclohexan) und Triisocyanatononan.

Die Polyurethansysteme können weiterhin zusätzliche Komponenten wie Additive oder Katalysatoren enthalten. Hinsichtlich der Katalysatoren sind Beispiele für Polyurethankatalysatoren aminische Katalysatoren, insbesondere ausgewählt aus der Gruppe Triethylendiamin, N,N-Dimethylcyclohexylamin, Dicyclohexylmethylamin, Tetramethylendiamin, 1-Methyl-4-dimethylaminoethylpiperazin, Triethylamin, Tributylamin, Dimethylbenzylamin, N,N',N"-Tris-(dimethylaminopropyl)hexahydrotriazin, Tris-(dimethylaminopropyl)amin, Tris(dimethylaminomethyl)phenol, Dimethylaminopropylformamid, N,N,N',N'-Tetramethylethylendiamin, N,N,N',N'-Tetramethylbutandiamin, Tetramethylhexandiamin, Pentamethyldiethylentriamin, Pentamethyldipropylentriamin, Tetramethyldiaminoethylether, Dimethylpiperazin, 1,2-Dimethylimidazol, 1-Azabicyclo[3.3.0]octan, Bis-(dimethylaminopropyl)-harnstoff, N-Methylmorpholin, N-Ethylmorpholin, N-Cyclohexylmorpholin, 2,3-Dimethyl-3,4,5,6-tetrahydropyrimidin, Triethanolamin, Diethanolamin, Triisopropanolamin, N-Methyldiethanolamin, N-Ethyldiethanolamin und/oder Dimethylethanolamin.

Beispiele für den Polyisocyanuratkatalysatoren sind Zinnverbindungen wie Zinn-(II)-acetat, Zinn-(II)-octoat, Zinn-(II)-ethylhexoat, Zinn-(II)-laurat, Dibutylzinndiacetat, Dibutylzinndilaurat, Dibutylzinnmaleat und/oder Dioctylzinndiacetat, weiterhin Stichstoffheterozyklen wie Tris-(N,N-dimethylaminopropyl)-s-hexahydrotriazin, Hydroxide wie Tetramethylammoniumhydroxid und/oder Natriumhydroxid oder Carbonsäuresalze eines Alkalimetalls wie Natrium-N-[(2-hydroxy-5-nonylphenyl)methyl]-N-methylaminoacetat, Natriumacetat, Natriumoctoat, Kaliumacetat und/oder Kaliumoctoat oder Gemische der vorgenannten Katalysatoren.

Hinsichtlich der Komponente (II) bedeutet der Begriff "silanterminiertes Polymer" im Rahmen der vorliegenden Erfindung ein Polymer mit mindestens einer, vorzugsweise zwei oder mehr endständigen Siloxangruppen, wie es beispielsweise durch die folgende Formel dargestellt wird:
(R1)(R2)(R3)Si-Polymer-Si(R4)(R5)(R6)
und R1 bis R6 unabhängig voneinander für Wasserstoff, Alkyl (insbesondere Methyl, Ethyl, Propyl, Butyl), Aryl (insbesondere Phenyl), O-Alkyl (insbesondere Methoxy, Ethoxy, Propoxy oder Butoxy) oder O-Aryl (insbesondere Phenoxy) stehen.

Die Wundverschluss-Zusammensetzung kann noch weitere Inhaltsstoffe wie Füllstoffe, Weichmacher oder rheologische Additive enthalten. Das Auftragen der Wundverschluss-Zusammensetzung kann beispielsweise mittels Streichen, Rollen oder Aufsprühen geschehen.

Weitere Aspekte und Ausführungsformen der vorliegenden Erfindung werden nachfolgend erläutert. Sie können beliebig miteinander kombiniert werden, sofern sich aus dem Zusammenhang nicht eindeutig das Gegenteil ergibt.

In einer Ausführungsform des erfindungsgemäßen Verfahrens weist die Wundverschluss-Zusammensetzung eine Topfzeit von ≥ 5 Minuten bis ≤ 120 Minuten auf. Unter Topfzeit oder Verarbeitungszeit wird der Zeitraum verstanden, der nach der vollständigen Vermischung eines Zwei- oder Mehrkomponentensystems zur sachgerechten Verarbeitung verbleibt, bevor die Viskosität der Mischung durch einsetzende Reaktion so hoch geworden ist, daß die Mischung nicht mehr sachgerecht verarbeitet werden kann. Vorzugsweise beträgt die Topfzeit ≥ 10 Minuten bis ≤ 50 Minuten und mehr bevorzugt ≥ 20 Minuten bis ≤ 35 Minuten. Damit ist ein Kompromiss zwischen einer möglichst raschen Wundverschluss und der möglichen Verarbeitungs- und Auftragszeit gesichert. Die Zeitangaben beziehen sich auf eine Materialmischmenge von 400 g, welche für eine einzelne Person auch beim Arbeiten an hohen Bäumen gut handhabbar ist.

In einer weiteren Ausführungsform des erfindungsgemäßen Verfahrens umfasst die Komponente (I) weiterhin ein chemisches und/oder ein physikalisches Treibmittel. Beispiele für geeignete Treibmittel sind fluorierte Kohlenwasserstoffe (HFC), fluorierte Olefine (HFO), Kohlenwasserstoffe und deren Gemische untereinander. Beispiele für geeignete chemische Treibmittel sind Wasser und Ameisensäure. Durch die Verwendung von Treibmitteln können Schäume der Wundverschluss-Zusammensetzung erhalten werden, welche auch tiefe, komplex geformte Kavitäten im verletzten Baum ausfüllen.

In einer weiteren Ausführungsform des erfindungsgemäßen Verfahrens umfasst die Komponente (I) ein (Meth)Acrylatgruppen umfassendes Polyol. Details zu diesen Polyacrylatpolyolen sind bereits vorstehend ausgeführt worden. Mit solchen Polyolen ist auch bei großflächigen Flächenverletzungen des Baums ein transparenter Anstrich möglich, da Polyacrylate eine hohe Lichtstabilität aufweisen. Besonders bevorzugt als NCO-reaktive Komponente (I) sind Polyacrylatpolyole mit OH-Zahlen (DIN 53240) von ≥ 90 mg KOH/g bis ≤ 110 mg KOH/g.

In einer weiteren Ausführungsform des erfindungsgemäßen Verfahrens ist das eingesetzte Isocyanurat in der Komponente (I) das Isocyanurat von 1,6-Hexamethylendiisocyanat. Dieses Isocyanurat kann beispielsweise in Form einer kommerziell erhältlichen Mischung der folgenden Zusammensetzung eingesetzt werden:

| **Struktur** | **Anzahl der Monomereinheiten *n*** | **Flächenprozent im Gaschromatogramm** |
|---|---|---|
| Uretdion | 2 | <1 |
| Isocyanurat | 3 (Idealstruktur) | 45-55 |
| Polyisocyanurat | 5 | 15-25 |
| Polyisocyanurat | 7 | 5-15 |
| Polyisocyanurat | 9 | 2-10 |
| Polyisocyanurat | 11 | 2-6 |
| Polyisocyanurat | 13 | 1-3 |
| Polyisocyanurat | 15 | 1-3 |
| Polyisocyanurat | >15 | <3 |

Hierbei addieren sich die angegebenen Flächenprozente zu ≤ 100%.

In einer weiteren Ausführungsform des erfindungsgemäßen Verfahrens ist in der Komponente (II) das silanterminierte Polymer ein silanterminiertes Polyetherpolyol, silanterminiertes Polyesterpolyol, silanterminiertes Polyesteretherpolyol, silanterminiertes Polycarbonatpolyol, silanterminiertes Polyurethan-Prepolymer oder silanterminiertes Polyurethan-Polymer. Bevorzugt sind silanterminierte Polyurethan-Polymere oder -Prepolymere, welche aus der Reaktion eines mindestens difunktionellen Polyols mit Isocyanatoalkoxysilanen wie (H₃C-O)₂(CH₃)Si-CH₂-NCO, (H₃C-O)₂(CH₃)Si-(CH₂)₃-NCO, (H₃C-O)₃Si-CH₂-NCO oder (H₃C-O)₃Si-(CH₂)₃-NCO erhältlich sind.

In einer weiteren Ausführungsform des erfindungsgemäßen Verfahrens umfasst die Wundverschluss-Zusammensetzung weiterhin ein organisches Lösungsmittel. Geeignete, für die Bäume unschädliche Lösungsmittel sind beispielsweise wasserfreie Carbonsäureester, Etherester und/oder Ketone. Von Fall zu Fall ist der Einsatz von Verschnittlösemittel angezeigt.

In einer weiteren Ausführungsform des erfindungsgemäßen Verfahrens enthält die Wundverschluss-Zusammensetzung kein organisches Lösungsmittel.

In einer weiteren Ausführungsform des erfindungsgemäßen Verfahrens umfasst die Wundverschluss-Zusammensetzung weiterhin Farbpigmente. Diese können anorganischen oder organischen Aufbau besitzen. Bevorzugt sind Titandioxid, Eisenoxide und/oder Chromoxid um damit der ursprünglichen Rindenfärbung optisch nahe zu kommen.

In einer weiteren Ausführungsform des erfindungsgemäßen Verfahrens enthält die Wundverschluss-Zusammensetzung keine Farbpigmente. Auf diese Weise kann eine durchsichtige Schutzschicht auf der Wunde erhalten werden, wodurch eine einfache optische Kontrolle der Wundentwicklung ermöglicht wird.

In einer weiteren Ausführungsform des erfindungsgemäßen Verfahrens wird die Wundverschluss-Zusammensetzung beim Astschnitt in einer Schichtdicke von ≥ 0,1 mm bis ≤ 6 mm aufgetragen. Bevorzugt ist eine Schichtstärke von 0,5 - 3 mm. Bei tiefen Baumwunden können auch Verfüllungen und Verschäumungen vollzogen werden, wobei die erforderlichen Material- und Auftragsmengen den Hohlräumen angepasst werden.

Ein weiterer Gegenstand der vorliegenden Erfindung ist die Verwendung einer Wundverschluss-Zusammensetzung zur Behandlung von Fäulnisherden und/oder Verletzungen der Rinde von stoffwechselaktiven Laub- oder Nadelgehölzen, wobei die Wundverschluss-Zusammensetzung die Komponenten (I) und/oder (II) umfasst:
(I) ein 1K- oder 2K-Polyurethansystem, wobei die Polyisosocyanat-Komponente des 1K- oder 2K-Polyurethansystems ein Isocyanurat eines aliphatischen Polyisocyanats umfasst;
(II) ein silanterminiertes Polymer.

Bezüglich der Definitionen in den Komponenten wird zur Vermeidung von Wiederholungen auf die Ausführungen zum erfindungsgemäßen Verfahren verwiesen.

In einer Ausführungsform der erfindungsgemäßen Verwendung weist die Wundverschluss-Zusammensetzung eine Topfzeit von ≥ 5 Minuten bis ≤ 120 Minuten auf. Vorzugsweise beträgt die Topfzeit ≥ 10 Minuten bis ≤ 50 Minuten und mehr bevorzugt > 20 Minuten bis < 35 Minuten.

In einer weiteren Ausführungsform der erfindungsgemäßen Verwendung ist das eingesetzte Isocyanurat in der Komponente (I) das Isocyanurat von 1,6-Hexamethylendiisocyanat. Dieses Isocyanurat kann beispielsweise in Form einer kommerziell erhältlichen Mischung der folgenden Zusammensetzung eingesetzt werden:

| **Struktur** | **Anzahl der Monomereinheiten *n*** | **Flächenprozent im Gaschromatogramm** |
|---|---|---|
| Uretdion | 2 | <1 |
| Isocyanurat | 3 (Idealstruktur) | 45-55 |
| Polyisocyanurat | 5 | 15-25 |
| Polyisocyanurat | 7 | 5-15 |
| Polyisocyanurat | 9 | 2-10 |
| Polyisocyanurat | 11 | 2-6 |
| Polyisocyanurat | 13 | 1-3 |
| Polyisocyanurat | 15 | 1-3 |
| Polyisocyanurat | >15 | <3 |

Hierbei addieren sich die angegebenen Flächenprozente zu ≤ 100%.

In einer weiteren Ausführungsform der erfindungsgemäßen Verwendung ist in der Komponente (II) das silanterminierte Polymer ein silanterminiertes Polyetherpolyol, silanterminiertes Polyesterpolyol, silanterminiertes Polyesteretherpolyol, silanterminiertes Polycarbonatpolyol, silanterminiertes Polyurethan-Prepolymer oder silanterminiertes Polyurethan-Polymer. Bevorzugt sind silanterminierte Polyurethan-Polymere oder -Prepolymere, welche aus der Reaktion eines mindestens difunktionellen Polyols mit Isocyanatoalkoxysilanen wie (H₃C-O)₂(CH₃)Si-CH₂-NCO, (H₃C-O)₂(CH₃)Si-(CH₂)₃-NCO, (H₃C-O)₃Si-CH₂-NCO oder (H₃C-O)₃Si-(CH₂)₃-NCO erhältlich sind.

In einer weiteren Ausführungsform der erfindungsgemäßen Verwendung umfasst die Komponente (I) ein (Meth)Acrylatgruppen umfassendes Polyol. Details zu diesen Polyacrylatpolyolen sind bereits vorstehend ausgeführt worden. Besonders bevorzugt als NCO-reaktive Komponente (I) sind Polyacrylatpolyole mit OH-Zahlen (DIN 53240) von ≥ 90 mg KOH/g bis ≤ 110 mg KOH/g

Selbstverständlich können die hier nicht gesondert aufgeführten Ausführungsformen, welche im Zusammenhang mit dem erfindungsgemäßen Verfahren beschrieben wurden, auch auf die erfindungsgemäße Verwendung übertragen werden.

Sowohl für das erfindungsgemäße Verfahren als auch für die erfindungsgemäße Verwendung sei als Wundverschluss-Zusammensetzung ein 2K-Polyurethansystem umfassend 1,6-Hexamethylendiisocyanat-Isocyanurat als Polyisocyanatkomponente und ein Polyacrylatpolyol mit einer OH-Zahl (DIN 53240) von ≥ 90 mg KOH/g bis ≤ 110 mg KOH/g als NCO-reaktive Komponente ausdrücklich genannt.

Die vorliegende Erfindung wird anhand des nachfolgenden Beispiels näher erläutert werden, ohne jedoch darauf festgelegt zu sein.

### Beispiel 1

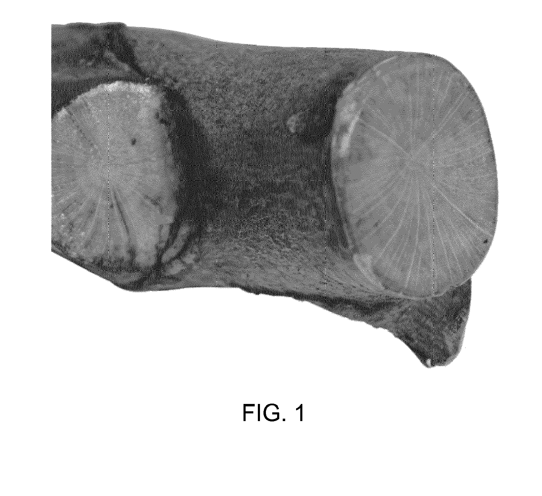

Ein Baum mit zwei Schnittflächen im Zuge von Baumpflegemaßnahmen wurde mit einem transparenten, erfindungsgemäßen 2K-Polyurethansystem mit Desmodur® N3300 (HDI-Trimer/Isocyanurat, NCO-Gehalt 21,8 ± 0,3% gemäß DIN EN ISO 11909) als PolyisocyanatKomponente in Kombination mit Desmophen® A870 (Polyacrylatpolyol, 70% in Butylacetat, OH-Zahl 97 mg KOH/g, OH-Gehalt 2,95%) als hydroxylgruppenhaltige Polyacrylat-Komponente behandelt. Das System wurde auf eine Verarbeitungszeit (Topfzeit) von ca. 20 Minuten eingestellt. Das Ergebnis des Wundverschlusses nach der Schnittmaßnahme ist in FIG. 1 dargestellt. Die erfindungsgemäß verschlossene Schnittwunde zeigte keine Wundverfärbung oder dergleichen. Man konnte bereits feststellen, dass sie von der Seite her überwallt wird.

## Patentansprüche

1. Verfahren zur Behandlung von Fäulnisherden und/oder Verletzungen der Rinde von stoffwechselaktiven Laub- oder Nadelgehölzen, umfassend den Schritt des Auftragens einer Wundverschluss-Zusammensetzung auf den Fäulnisherd und/oder die Verletzung,
**dadurch gekennzeichnet, dass**
die Wundverschluss-Zusammensetzung die Komponenten (I) und/oder (II) umfasst:
(I) ein 1K- oder 2K-Polyurethansystem, wobei die Polyisocyanat-Komponente des 1K- oder 2K-Polyurethansystems ein Isocyanurat eines aliphatischen Polyisocyanats umfasst;
(II) ein silanterminiertes Polymer.

2. Verfahren gemäß Anspruch 1, wobei die Wundverschluss-Zusammensetzung eine Topfzeit von ≥ 5 Minuten bis ≤ 120 Minuten aufweist.

3. Verfahren gemäß Anspruch 1 oder 2, wobei die Komponente (I) weiterhin ein chemisches und/oder ein physikalisches Treibmittel umfasst.

4. Verfahren gemäß einem oder mehreren der Ansprüche 1 bis 3, wobei die Komponente (I) ein (Meth)Acrylatgruppen umfassendes Polyol umfasst.

5. Verfahren gemäß einem oder mehreren der Ansprüche 1 bis 4, wobei das eingesetzte Isocyanurat in der Komponente (I) das Isocyanurat von 1,6-Hexamethylendiisocyanat ist.

6. Verfahren gemäß einem oder mehreren der Ansprüche 1 bis 5, wobei in der Komponente (II) das silanterminierte Polymer ein silanterminiertes Polyetherpolyol, silanterminiertes Polyesterpolyol, silanterminiertes Polyesteretherpolyol, silanterminiertes Polycarbonatpolyol, silanterminiertes Polyurethan-Prepolymer oder silanterminiertes Polyurethan-Polymer ist.

7. Verfahren gemäß einem oder mehreren der Ansprüche 1 bis 6, wobei die Wundverschluss-Zusammensetzung weiterhin ein organisches Lösungsmittel umfasst.

8. Verfahren gemäß einem oder mehreren der Ansprüche 1 bis 6, wobei die Wundverschluss-Zusammensetzung kein organisches Lösungsmittel enthält.

9. Verfahren gemäß einem oder mehreren der Ansprüche 1 bis 8, wobei die Wundverschluss-Zusammensetzung weiterhin Farbpigmente umfasst.

10. Verfahren gemäß einem oder mehreren der Ansprüche 1 bis 8, wobei die Wundverschluss-Zusammensetzung keine Farbpigmente enthält.

11. Verfahren gemäß einem oder mehreren der Ansprüche 1 bis 10, wobei die Wundverschluss-Zusammensetzung beim Astschnitt in einer Schichtdicke von ≥ 0,1 mm bis ≤ 6 mm aufgetragen wird.

12. Verwendung einer Wundverschluss-Zusammensetzung zur Behandlung von Fäulnisherden und/oder Verletzungen der Rinde von stoffwechselaktiven Laub- oder Nadelgehölzen,
**dadurch gekennzeichnet, dass**
die Wundverschluss-Zusammensetzung die Komponenten (I) und/oder (II) umfasst:
(I) ein 1K- oder 2K-Polyurethansystem, wobei die Polyisocyanat-Komponente des 1K- oder 2K-Polyurethansystems ein Isocyanurat eines aliphatischen Polyisocyanats umfasst;
(II) ein silanterminiertes Polymer.

13. Verwendung gemäß Anspruch 12, wobei die Wundverschluss-Zusammensetzung eine Topfzeit von ≥ 5 Minuten bis ≤ 120 Minuten aufweist.

14. Verwendung gemäß Anspruch 12 oder 13, wobei das eingesetzte Isocyanurat in der Komponente (I) das Isocyanurat von 1,6-Hexamethylendiisocyanat ist.

15. Verwendung gemäß einem oder mehreren der Ansprüche 12 bis 14, wobei in der Komponente (II) das silanterminierte Polymer ein silanterminiertes Polyetherpolyol, silanterminiertes Polyesterpolyol, silanterminiertes Polyesteretherpolyol, silanterminiertes Polycarbonatpolyol, silanterminiertes Polyurethan-Prepolymer oder silanterminiertes Polyurethan-Polymer ist.
